# EUROPEAN PATENT APPLICATION

(11) **EP 4 752 650 A1**
(43) Date of publication of application: **03.06.2026**
(21) Application number: 24845122.1
(22) Date of filing: 17.04.2024
(51) Int. Cl.: G05B 19/04

(54) **REMOTE-CONTROL DEVICE, CONTROL DEVICE, REMOTE-CONTROL SYSTEM, AND CONTROL METHOD**

(30) Priority: 25.07.2023 JP 2023121007
(71) Applicant: KABUSHIKI KAISHA TOSHIBA, Minato-ku Tokyo 105-0023 (JP)
(72) Inventor: MATSUYAMA, Hiroki, Kawasaki-shi, Kanagawa 212-0013 (JP); OHNISHI, Naoya, Kawasaki-shi, Kanagawa 212-0013 (JP); HIRANO, Tatsuma, Kawasaki-shi, Kanagawa 212-0013 (JP)
(74) Representative: AWA Sweden AB
(86) International application number: PCT/JP2024/015244
(87) International publication number: WO 2025/022737

(57) **Abstract**

To provide a remote control device, a control device, a remote control system, and a control method that enable control through a network to be executed more stably.

According to the present embodiment, a remote control device that processes a plurality of same signals transmitted through a network including a plurality of transmission paths includes a communicator, a control order determiner, and a control program executer. The communicator asynchronously receives the signals each associated with an identifier. The control order determiner determines whether an input value included in each of the signals is in predetermined order on the basis of the identifiers. The control program executer executes a control program of a controller using the input value when the control order determiner determines that the input value is in the predetermined order.

## Description

### Field

The embodiments of the present invention relate to a remote control device, a control device, a remote control system, and a control method.

### Background

In general control systems, all constituent elements are placed on a field and a control program created by a user is also kept in a device in the field. In recent years, with demands of remote control and remote management, execution of a control program by a remote control device through a wide area network is also conceivable.

### Citation List

### Patent Literature

Patent Literature 1: Japanese Patent No. 3269792

### Summary

### Technical Problem

However, from the viewpoint of real-time capability, adoption of asynchronous communications is considered depending on contents of control. In such a case, there is a possibility that control computing cannot be continued in order due to communication delays on the wide area network.

To solve this problem, an object of the present embodiment is to provide a remote control device, a control device, a remote control system, and a control method that enable control through a network to be executed more stably.

### Solution to Problem

According to the present embodiment, a remote control device that processes a plurality of same signals transmitted through a network including a plurality of transmission paths includes a communicator, a control order determiner, and a control program executer. The communicator asynchronously receives the signals each associated with an identifier. The control order determiner determines whether an input value included in each of the signals is in predetermined order on the basis of the identifiers. The control program executer executes a control program of a controller using the input value when the control order determiner determines that the input value is in the predetermined order.

### Effect of the Invention

It is possible to execute control through a network more stably.

### Brief Description of Drawings

[FIG. 1] FIG. 1 is a diagram illustrating a configuration example of a remote control system according to a first embodiment.
[FIG. 2] FIG. 2 is a block diagram illustrating a configuration example of a remote control device and a control device.
[FIG. 3] FIG. 3 is a diagram illustrating an example of a processing sequence of the remote control device and the control device.
[FIG. 4] FIG. 4 is a block diagram illustrating a configuration example of a remote control device and a control device according to a second embodiment.
[FIG. 5] FIG. 5 is a diagram illustrating a processing sequence example according to the second embodiment.
[FIG. 6] FIG. 6 is a block diagram illustrating a configuration example of a remote control device and a control device according to a third embodiment.
[FIG. 7] FIG. 7 is a diagram illustrating a processing sequence example according to the second embodiment.
[FIG. 8] FIG. 8 is a block diagram illustrating a configuration example of a remote control system according to a fourth embodiment.
[FIG. 9] FIG. 9 is a flowchart illustrating an example of a determination process of a cycle time determiner.
[FIG. 10] FIG. 10 illustrates a sequence example of the remote control system according to the fourth embodiment.
[FIG. 11] FIG. 11 is a flowchart illustrating an example of a determination process of a cycle time determiner according to a second modification of the fourth embodiment.
[FIG. 12] FIG. 12 is a diagram illustrating a sequence example of a remote control system according to the second modification of the fourth embodiment.

### Description of Embodiments

A remote control device, a control device, a remote control system, and a control method according to embodiments of the present invention will now be explained in detail with reference to the drawings. The embodiments described below are only examples of the embodiments of the present invention and the present invention is not limited to the embodiments. In the drawings referred to in the embodiments, the same parts or parts having identical functions are denoted by like or similar reference signs and redundant explanations thereof are omitted in some cases. Further, for convenience of explanation, there are cases where dimensional ratios of the parts in the drawings are different from those of actual products and some part of configurations is omitted from the drawings.

### (First embodiment)

### (Configuration)

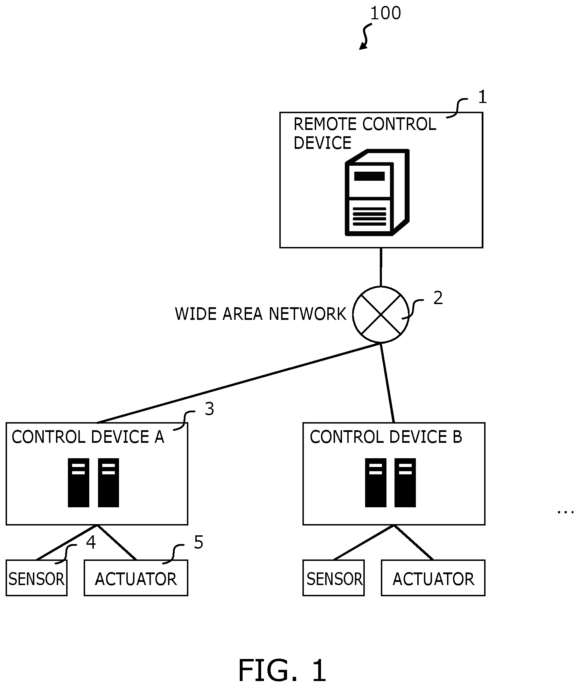

FIG. 1 is a diagram illustrating a configuration example of a remote control system 100 according to a first embodiment. As illustrated in FIG. 1, the remote control system 100 is a system that can control actuators 5 being an example of a field device through a wide area network 2. This remote control system 100 includes a remote control device 1, a plurality of control devices 3, a plurality of sensors 4, and a plurality of actuators 5.

The remote control device 1 includes, for example, a CPU (Censral Processing Unis), memories (a first input memory 14 and a first output memory 15, which will be described later), and the like. The CPU of the remote control device 1 performs various kinds of control processing, for example, by executing programs stored in the memories. This remote control device 1 generates a control signal (output information) for controlling each of the actuators 5 on the basis of a process amount (input information) from the relevant sensor 4 received from the control device 3 through the wide area network 2. The remote control device 1 then transmits the control signal to the actuator 5 via the wide area network 2 and the control device 3. In this way, the remote control device 1 can control a plurality of actuators 5 through the wide area network 2. In the present embodiment, information included in a signal transmitted from each of the control devices 3 to the wide area network 2 is also referred to as input information and information included in a signal transmitted from the remote control device 1 to the wide area network 2 is also referred to as output information in some cases. While the process amount is used as an example of the input information in the present embodiment, the input information is not limited thereto. Similarly, while the control signal is used as an example of the output information, the output information is not limited thereto.

The wide area network 2 is a network having a plurality of communication paths. While being, for example, the internet, the wide area network 2 is not limited thereto. For example, a local communication line such as a LAN (Loacal Area network), a wide wired communication line such as a WAN (Wide Area Network), and a wireless communication line according to communication standards such as 3G (Generation), 4G, and 5G may be used.

The control device 3 is placed in a field where field devices are arranged and includes, for example, a CPU, memories (a second input memory 33 and a second output memory 34, which will be described later), and the like. The CPU of the control device 3 performs various kinds of control processing, for example, by executing programs stored in the memories. The control device 3 transmits, for example, a process amount as input information of the relevant sensor 4 to the remote control device 1 through the wide area network 2. The control device 3 receives, for example, a control signal as output information from the remote control device 1 through the wide area network 2 and outputs the control signal to the relevant actuator 5.

The sensor 4 outputs various process amounts required for control of the actuator 5 to the control device 3. The actuator 5 is a controller that is driven in accordance with a control signal of the remote control device 1 input from the control device 3. While being the actuator 5 in the present embodiment, the controller is not limited thereto. For example, the controller may be a robot arm, a drive motor, a control valve, a surveillance camera, or the like. As described above, it suffices that the controller is, for example, a device that is controlled according to a control signal being the output information according to a process amount being the input information of the sensor 4. The number of the control devices 3 is not limited to two and may be one, or three or more. The control devices 3, the sensors 4, and the actuators 5 may be placed in the same field, or may be placed in different fields. The performances of the control devices 3, the sensors 4, and the actuators 5 may be different from each other, or may be uniform.

Referring back to the wide area network 2, the real-time capability is considered as important to control field devices in communications between the remote control device 1 and the control device 3 according to the present embodiment. Therefore, the remote control device 1 and the control device 3 transmit data to each other, for example, asynchronously. For example, a UDP (User Datagram Protocol) is used for these communications.

When a control signal is transmitted from the remote control device 1, identification information of the remote control device 1 being a transmission source as a transmission source port, identification information of the control device 3 being a transmission destination as a destination port, the data length of the control signal, a checksum, and the like are added to a UDP header of an IP packet, for example. The transmission source port and the destination port are used for determination by the control device 3 that uses the control signal. The data length is used to know the length of data of the transmitted control signal, and the checksum is used to check whether the data of the sent control signal is defective or has been improperly rewritten.

When a process amount is transmitted from the control device 3, the identification information of the control device 3 being a transmission source as a transmission source port, the identification information of the remote control device 1 being a transmission destination as a destination port, the data length of the process amount, a checksum, an identifier indicating the transmission order of the process amount, and the like are added to a UDP header of an IP packet, for example.

As described above, the wide area network 2 includes a plurality of communication paths between the remote control device 1 and the control device 3 and there is a risk that different communication delays occur according to the communication paths. Accordingly, as described later, the control device 3 assigns an identifier indicating the same transmission order to the same process amount and transmits a plurality of IP packets asynchronously. That is, IP packets according to the present embodiment are transmitted redundantly. These redundantly-generated IP packets are highly likely to be transmitted through different communication paths between the remote control device 1 and the control device 3. Therefore, even when communication delays on some of the communication paths become great, the IP packets are highly likely to be transmitted in a shorter time on other communication paths. Accordingly, in terms of probability, influences of the communication delays on the wide area network 2 are suppressed more as the number of packets transmitted redundantly is larger.

While the UDP (User Datagram Protocol) is used in the communications according to the present embodiment, the protocol is not limited thereto. For example, a communication protocol that enables asynchronous communications can be used. The format of transmission data is not limited to an IP packet. For example, it suffices that the transmission data is a signal including information required for control. For example, it suffices that a transmission signal from the control device 3 includes the identification information of the control device 3 as the transmission source, the identification information of the remote control device 1 as the transmission destination, the data length of the process amount, and the identifier indicating the transmission order. Similarly, for example, it suffices that a transmission signal from the remote control device 1 includes the identification information of the remote control device 1 as the transmission source, the identification information of the control device 3 as the transmission destination, and the data length of a control signal. The header format of an IP packet is not limited to the UDP header. Furthermore, functional blocks of the remote control device 1 and the control device 3 may operate on a virtual container or a virtual machine.

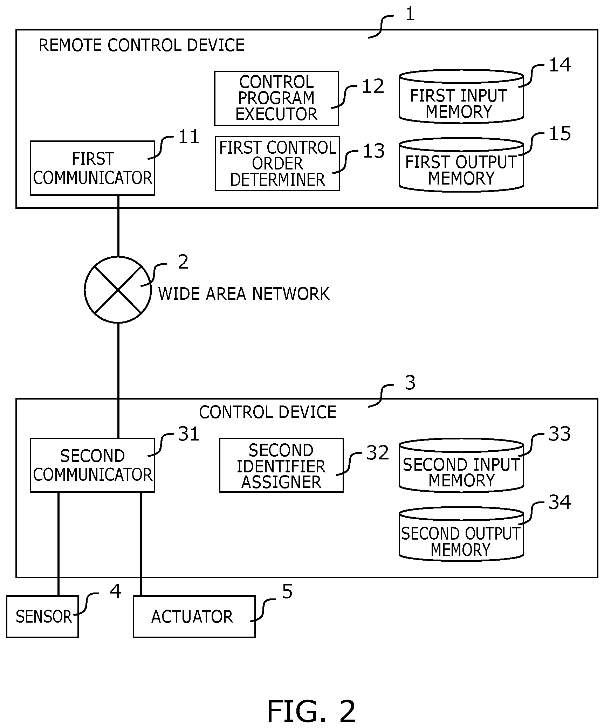

FIG. 2 is a block diagram illustrating a configuration example of the remote control device 1 and the control device 3. The remote control device 1 has a first communicator 11, a control program executor 12, a first control order determiner 13, the first input memory 14, and the first output memory 15. The control device 3 has a second communicator 31, a second identifier assigner 32, the second input memory 33, and the second output memory 34.

The configuration example of the remote control device 1 is described first. The first communicator 11 of the remote control device 1 asynchronously performs communications with the second communicator 31 of the control device 3. As described above, for example, the UDP (User Datagram Protocol) is used in the communications between the first communicator 11 and the second communicator 31.

The first communicator 11 receives IP packets through the wide area network 2. The first communicator 11 stores the IP packets in the first input memory 14 after checking that the transmission source port and the destination port of the IP packets coincide with setting information stored in the first input memory 14 and that data of the process amount is not defective or has not been improperly rewritten using the checksum. More specifically, at the time of this check, the first communicator 11 determines whether the transmission source port that is unique information of plural control devices 3 and the destination port coincide with the setting information. This enables the remote control device 1 to change contents of control processing with respect to each transmission source port. That is, the remote control device 1 performs independent control processing for the plural control devices 3. For example, a program, setting values, and information received via the first communicator 11 are stored in the first input memory 14. For example, information to be transmitted via the first communicator 11 is stored in the first output memory 15.

The first control order determiner 13 has a storage element. When new data is stored in the first input memory 14, the first control order determiner 13 reads the transmission source port and the identifier indicating the transmission order from the new data and determines whether the data is in predetermined order. That is, the first control order determiner 13 determines whether this new data is data first stored from the transmission source port that has transmitted the data. When the new data is first stored data, the first control order determiner 13 outputs a control notification including information of a storage region of the new data to the control program executer 12.

More specifically, when outputting the control notification, the first control order determiner 13 stores the read identifier in the storage element according to the transmission source port. Next, when new data is stored in the first input memory 14, the first control order determiner 13 reads the identifier indicating the transmission order from the new data and compares the identifier with the identifier stored in the storage element according to the transmission source port. When the values are different, the first control order determiner 13 determines that this new data is first stored data. When the values are the same, the first control order determiner 13 determines that this new data is already stored data. At the time of start-up, the first control order determiner 13 stores, for example, null as an initial value in the storage element.

When the control notification from the first control order determiner 13 is input, the control program executer 12 performs processing of reading the process amount stored in the first input memory 14 using the information of the storage region included in the control notification. The control program executer 12 generates a control signal using the read process amount and stores the control signal in the first output memory 15.

The first communicator 11 is referred back to. When the control signal generated by the control program executer 12 is newly stored in the first output memory 15, the first communicator 11 performs reading of the control signal from the first output memory 15. The first communicator 11 generates an IP packet including the control signal and transmits the IP packet to the control device 3 being the transmission source of the process amount through the wide area network 2. That is, the first communicator 11 generates the IP packet designating the transmission source port of the process amount as the destination port.

The configuration example of the control device 3 is described next. When new data of the process amount is input from the sensor 4, the second communicator 31 stores the process amount in the second input memory 33 and notifies the second identifier assigner 32 of an input notification including information of a storage region in which the process amount is stored.

When the input notification including the information of the storage region is input, the second identifier assigner 32 stores the data of the process amount in this region and an identifier indicating the transmission order in the second output memory 34. An identifier indicating the transmission order of the process amount according to the present embodiment is, for example, a serial number that is incremented with respect to each input notification being a notification signal, or a timestamp indicating the time when the input notification has been received.

The second communicator 31 is referred back to. The second communicator 31 generates a plurality of IP packets each including the data of the process amount stored in the second output memory 34 and the identifier indicating the transmission order, and transmits the IP packets to the remote control device 1 through the wide area network 2.

The second communicator 31 stores a received IP packet in the second output memory 34 after checking that the transmission source port and the destination portion coincide with the setting information and that the data of the process amount is not defective or has not been improperly rewritten using the checksum. The second communicator 31 reads the control signal from the IP packet and outputs the control signal to the actuator 5. For example, a program, setting values, and information input from the sensor 4 are stored in the second input memory 33. For example, information to be output to the sensor 4 is stored in the second output memory 34.

### (Operation)

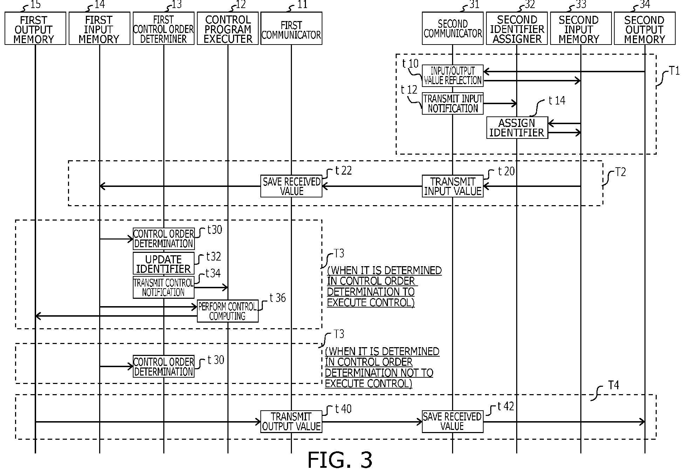

FIG. 3 is a diagram illustrating an example of a processing sequence of the remote control device 1 and the control device 3. A processing sequence example according to the first embodiment is described using FIG. 3 with reference to FIG. 2. As illustrated in FIG. 3, the processing sequence according to the first embodiment is a sequence example in which control processing on the actuator 5 is computed in order without performing synchronization processing between the remote control device 1 and the control device 3. That is, a series of processes T1, T2, T3, and T4 are periodically performed independently of each other.

### (Process T1)

The process T1 is a communication process between the control device 3, and the sensor 4 and the actuator 5 and a process of assigning an identifier required for order determination. The second communicator 31 of the control device 3 saves input information received from the sensor 4 in the second input memory 33 (t10). Subsequently, the second communicator 31 transmits an input notification indicating that there has been an input to the second identifier assigner 32 (t12). The second identifier assigner 32 having received the input notification assigns an identifier required for order determination and a transmission source identifier for distinguishing the control device 3 and saves the identifiers in the second input memory 33 (t14). An identifier for distinguishing a control device is a number allocated to uniquely distinguish the control devices 3.

### (Process T2)

The process T2 is a process for transmitting contents in the second input memory 33 of the control device 3 to the remote control device 1. The second communicator 31 of the control device 3 reads the input value and the identifier in the second input memory 33 and transmits the input value and the identifier to the remote control device 1 (t20). The first communicator 11 of the remote control device 1 having received the input value and the identifier saves the received values in the first input memory 14 (t22).

### (Process T3)

The process T3 is a process for executing a control program in order in the remote control device 1. The first control order determiner 13 reads the identifier from the first input memory 14 and performs control order determination with respect to each identifier for distinguishing the control device (t30). The first control order determiner 13 performs the determination using the stored identifier and the read identifier. The first control order determiner 13 determines whether the identifier is in order when the identifier is a serial number, and determines whether the identifier is consistent in the cycle when the identifier is a timestamp.

When determining that the identifier is in order or is consistent in the cycle, the first control order determiner 13 stores the read identifier as the last computed identifier (t32) and transmits a control notification notifying the control program executer 12 of execution of control computing (t34). When receiving the control notification, the control program executer 12 reads the input value from the first input memory 14, performs control computing, and saves an output value in the first output memory 15 (t35).

### (Process T3')

A process T3' is a process of not performing control computing. When the stored identifier and the read identifier are the same, the first control order determiner 13 determines not to perform control computing (t30) and does not transmit a control notification. When it is determined not to perform control computing, the process T3 is replaced by the process denoted by T3'. That is, in the process T3', the first control order determiner 13 maintains the value of the identifier and does not transmit a control notification.

### (Process T4)

The process T4 is a process for transmitting contents of the first output memory 15 of the remote control device 1 to the control device 3. When a new control signal is stored, the first communicator 11 of the remote control device 1 reads the control signal (the output value) of the first output memory 15 and transmits the control signal to the control device 3 (t40). The second communicator 31 of the control device 3 having received the control signal (the output value) saves the output value in the second output memory 34 (t42). The second communicator 31 reads information of the transmission source and the output value as the control signal after checking data from the second output memory 34, and outputs the information and the output value to the actuator 5.

In this way, by the processes T1, T2, T3, and T4 periodically performed independently of each other, even the remote control device 1 using the wide area network 2 can repeatedly perform control computing in order.

### (Effect)

As described above, according to the present embodiment, the second identifier assigner 32 assigns an identifier required for order determination and an identifier for distinguishing the control device 3 to transmit a plurality of transmission signals including the process amount being an input value from the sensor 4 to the remote control device 1 through the wide area network 2. Accordingly, with the identifier required for order determination, the remote control device 1 is enabled to use only the first received process amount for control. Therefore, also when different communication delays occur according to the communication paths of the wide area network 2, it is possible to continue to perform control computing in order while suppressing the communication delay between the remote control device 1 and the control device 3.

### (Second embodiment)

The remote control system 100 according to a second embodiment is different from the remote control system 100 according to the first embodiment in that each of the control devices 3 also determines the transmission order. Differences from the remote control system 100 according to the first embodiment are described below.

### (Configuration)

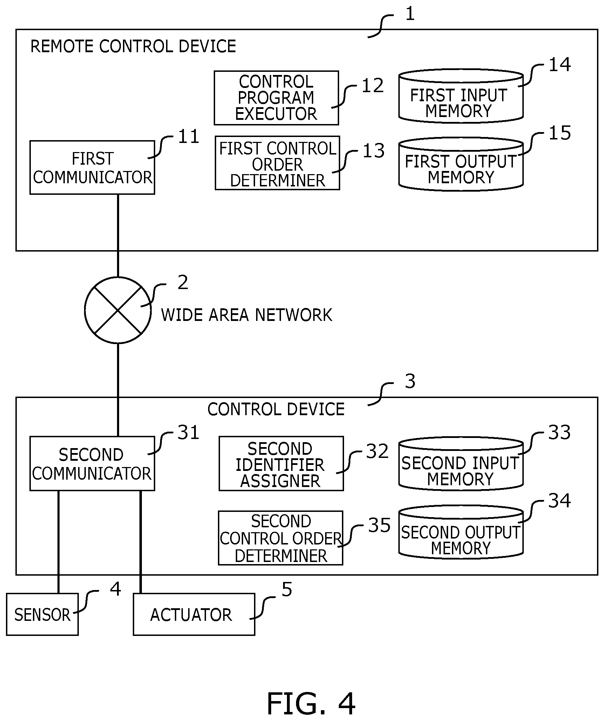

FIG. 4 is a block diagram illustrating a configuration example of the remote control device 1 and the control device 3 according to the second embodiment. The control device 3 according to the second embodiment is different from the control device 3 according to the first embodiment in further having a second control order determiner 35.

For example, in a case where a control signal is transmitted redundantly, influences on control of the actuator 5 are limited even when the control device 3 receives plural control signals when the control signal has a fixed value such as 10 degrees of a valve opening degree. Meanwhile, when control of increasing the opening degree of a valve in increments of a certain value is to be executed, for example, by a control signal instructing an increase of two degrees of the valve opening degree, erroneous control is executed if the control device 3 processes plural same control signals. In the present embodiment, to solve this problem, the second control order determiner 35 performs order determination.

The second control order determiner 35 has a storage element. When new data is stored in the second output memory 34, the second control order determiner 35 stores the time of the storage in the storage element. The second control order determiner 35 calculates a difference between a first time of last storage in the storage element and a second time of this storage and determines that this is a new control signal when the difference is above a predetermined value.

The remote control device 1 transmits plural same control signals through the wide area network 2. The order of the time interval is different between the reception interval of the same control signals, and the reception interval of next control signals. For example, when a control cycle of the remote control device 1 has elapsed from a time when a control signal calculated last time has been transmitted, the remote control device 1 transmits a control signal calculated this time. Accordingly, while fluctuation due to delays on the wide area network 2 occurs, the difference between the first time of last storage and the second time of this storage has a value reflecting the control cycle. Therefore, the second control order determiner 35 calculates the difference between the first time of last storage in the storage element and the second time of this storage, and can determine that this is a new control signal when the difference is above the predetermined value.

For example, the second control order determiner 35 receives a notification of the control cycle of the remote control device 1 in advance from the remote control device 1. Alternatively, the second control order determiner 35 may calculate the control cycle of the remote control device 1 from reception times (timestamps) of received signals of the remote control device 1.

### (Operation)

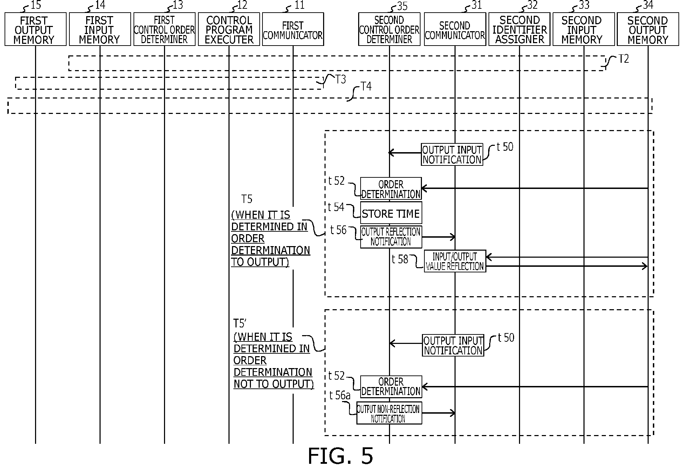

FIG. 5 is a diagram illustrating a processing sequence example according to the second embodiment. The processing sequence example according to the second embodiment is described using FIG. 5 with reference to FIG. 4. As illustrated in FIG. 4, the processing sequence according to the first embodiment is a sequence in which control is computed in order without performing synchronization processing. That is, a series of processes T1, T2, T3, T4, T5, and T5' are different in that order determination is added to the process of outputting to the actuator 5 to be separated as the processes T5 and T5'.

### (Process T5)

The process T5 is a process for outputting a control signal in order in the control device 3. The second communicator 31 of the control device 3 outputs an input notification including a storage region of new data and the reception time thereof to the second control order determiner 35 when the new data is saved in the second output memory 34 (t50).

The second control order determiner 35 calculates a difference between the first time of last storage in the storage element and the second time of this storage and determines that this is a new control signal when the difference is above a predetermined value (t52). When determining that this is a new control signal, the second control order determiner 35 stores the second time as the first time in the storage element (t54). The second control order determiner 35 then outputs an output reflection notification to the second communicator 31 (t56). When the output reflection notification is input, the second communicator 31 outputs the control signal saved in the second output memory 34 to the actuator 5 (t58).

### (Process T5')

The process T5' is a process of not outputting the control signal. The difference between the first time of last storage in the storage element and the second time of this storage is calculated, and it is determined that these are the same control signals when the difference is not above the predetermined value (t52). The second control order determiner 35 determines not to output the control signal and outputs an output non-reflection notification to the second communicator 31 (t56a). When the output non-reflection notification is input, the second communicator 31 waits without responding.

### (Effect)

As described above, according to the present embodiment, the second control order determiner 35 determines the order of control signals. Accordingly, when the remote control device 1 transmits a plurality of transmission signals each including the same control signal to the control device 3 through the wide area network 2, the control device 3 is enabled to use only the first received control signal. Therefore, even when different communication delays occur on the communication paths of the wide area network 2, it is possible to continue to execute control signals in order while suppressing the communication delay between the remote control device 1 and the control device 3.

### (Third embodiment)

The remote control system 100 according to a third embodiment is different from the remote control system 100 according to the second embodiment in assigning an identifier required for order determination also to a control signal transmitted by the remote control device 1. Differences from the remote control system 100 according to the second embodiment are described below.

### (Configuration)

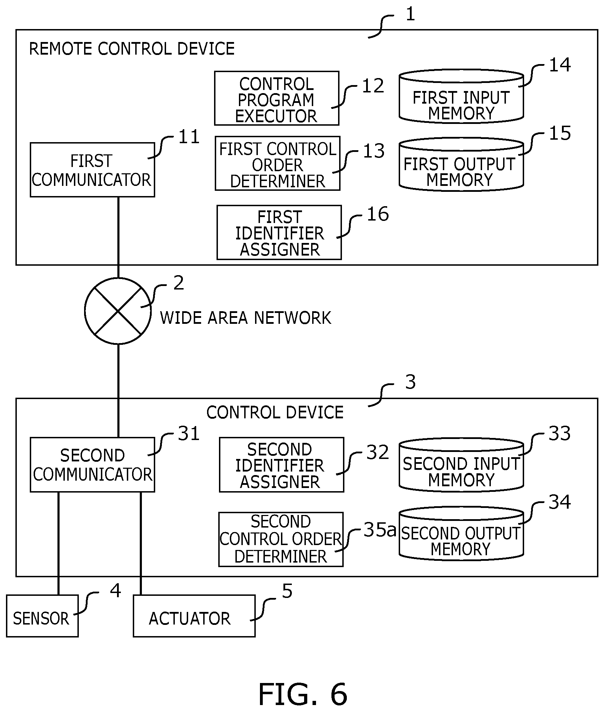

FIG. 6 is a block diagram illustrating a configuration example of the remote control device 1 and the control device 3 according to the third embodiment. The remote control device 1 according to the third embodiment is different from the remote control device 1 according to the second embodiment in further having a first identifier assigner 16. The first identifier assigner 16 of the remote control device 1 assigns an identifier indicating the transmission order to the output value of the first output memory 15. An identifier is, for example, a serial number that is incremented with respect to each output notification or a timestamp indicating the time when the output notification has been received.

The control device 3 according to the third embodiment is different from the control device 3 according to the second embodiment in further having a second control order determiner 35a. The second control order determiner 35a, the second control order determiner 35a according to the third embodiment can also perform order determination using an identifier in addition to the processing function of the second control order determiner 35 according to the second embodiment.

That is, when new data is stored in the second output memory 34, the second control order determiner 35a reads the transmission source port and the identifier indicating the transmission order from the new data and determines whether the data is in predetermined order. That is, the second control order determiner 35a determines whether the new data is data first stored from the transmission source port having transmitted this data. When the data is the first stored data, the second control order determiner 35a outputs an output reflection notification including information of a storage region of the new data to the second communicator 31. Accordingly, the second communicator 31 outputs a control signal included in the new data to the actuator 5.

More specifically, when outputting the output reflection notification, the second control order determiner 35a stores the read identifier in the storage element. Next, when new data is stored in the second output memory 34, the second control order determiner 35a reads the identifier indicating the transmission order from the new data, compares the read identifier with the identifier stored in the storage element, and determines that the data is first stored data when the values are different. When the values are the same, the second control order determiner 35a determines that the data is already stored data.

### (Operation)

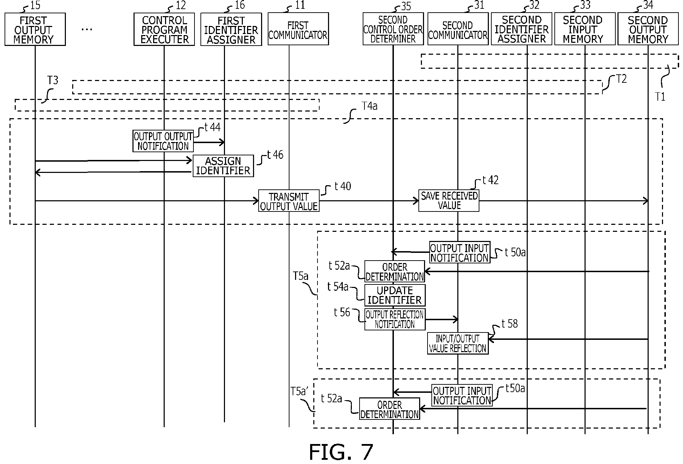

FIG. 7 is a diagram illustrating a processing sequence example according to the second embodiment. The processing sequence example according to the third embodiment is described using FIG. 7 with reference to FIG. 6. The same processes as those in the first embodiment or the second embodiment are denoted by the same reference numbers and descriptions thereof are omitted in some cases.

As illustrated in FIG. 6, the processing sequence according to the first embodiment is a sequence in which control is computed in order without performing synchronization processing. That is, a series of processes T1, T2, T3, T4a, T5a, and T5a' are periodically performed independently of each other. The processing sequence T4a according to the second embodiment is different from the processing sequence T4 according to the first embodiment in that a process of also assigning an identifier required for order determination to a control signal transmitted by the remote control device 1 is added and that the process of outputting to the actuator 5 is separated as the processes T5a and T5a'. Since the series of the processes T1, T2, and T3 are substantially the same as those in the processing sequence according to the first embodiment, descriptions thereof are omitted.

### (Process T4a)

The process T4a is a process for transmitting contents in the first output memory 15 of the remote control device 1 to the control device 3 with the identifier of the transmission order assigned thereto. When performing generation computing of a control signal and storing the control signal in the first output memory 15, the control program executer 12 of the remote control device 1 outputs an output notification including a storage region of the control signal to the first identifier assigner 16 (t44).

When the output notification is input, the first identifier assigner 16 assigns an identifier indicating the transmission order to the control signal, and saves the control signal and the identifier in the first output memory 15 (t46). The first communicator 11 of the remote control device 1 reads the control signal and the identifier in the first output memory 15 and transmits the control signal and the identifier to the control device 3. For example, the first communicator 11 generates a plurality of IP packets each including the control signal and the identifier indicating the transmission order stored in the first output memory 15, and outputs the IP packets to the control device 3 through the wide area network 2 (t40). The second communicator 31 of the control device 3 saves input information received from the remote control device 1 in the second output memory 34 (t42).

### (Process T5a)

The process T5a is a process for enabling the control device 3 to output control signals in order. When saving new data in the second output memory 34, the second communicator 31 of the control device 3 outputs an input notification including a storage region of the new data to the second control order determiner 35a (t50a).

The second control order determiner 35a reads the identifier from the data newly input to the second output memory 34 and performs control order determination (t52a). The second control order determiner 35 stores therein the identifier at the time of last determination and performs determination using the stored identifier and the read identifier. The second control order determiner 35 determines whether the identifier is in order when the identifier is a serial number, and whether the identifier is consistent in the cycle when the identifier is a timestamp.

When determining that the identifier is in order or is consistent in the cycle, the second control order determiner 35a updates the read identifier as the last determined identifier (t54a) and outputs an output reflection notification notifying the second communicator 31 of reflection of the control signal (t56). When the output reflection notification is input, the second communicator 31 reads the control signal from the second output memory 34 and outputs the signal to the actuator 5 (t58).

### (Process T5a')

The process T5a' is a process of not outputting the control signal. When the stored identifier and the read identifier are the same, the second control order determiner 35a determines not to output the control signal and does not output an output reflection notification. When it is determined not to output the control signal, the process T5 is replaced by the process denoted by T5'. That is, in the process T5', the second control order determiner 35a maintains the value of the identifier and does not output an output reflection notification.

### (Effect)

As described above, according to the present embodiment, the first identifier assigner 16 assigns an identifier required for order determination to transmit a plurality of transmission signals each including a control signal to the control device 3 through the wide area network 2. Accordingly, with the identifier required for order determination, the control device 3 is enabled to use only the first received control signal for control. Therefore, even when different communication delays occur on the communication paths of the wide area network 2, it is possible to continue to execute control signals in order while suppressing the communication delay between the remote control device 1 and the control device 3.

### (Fourth embodiment)

The remote control system 100 according to a fourth embodiment is different from the remote control system 100 according to the first embodiment in that control processing can be performed while the control cycles of the processes T2 to T4 are adjusted. Differences from the remote control system 100 according to the first embodiment are described below.

### (Configuration)

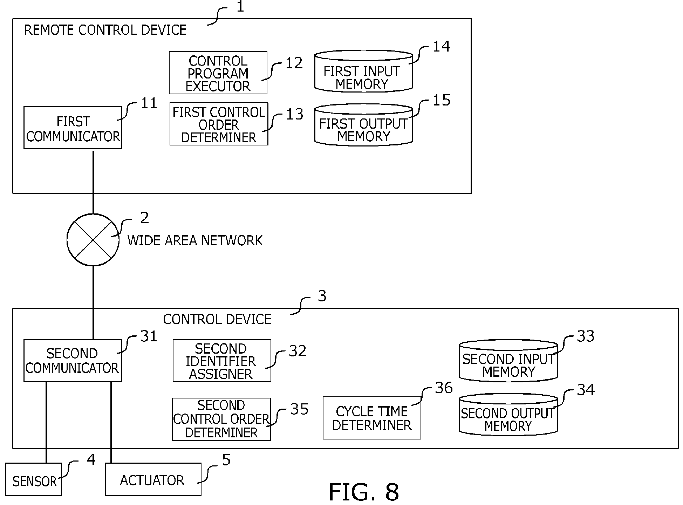

FIG. 8 is a block diagram illustrating a configuration example of the remote control system 100 according to the fourth embodiment. As illustrated in FIG. 8, the control device 3 according to the fourth embodiment is different from that in the remote control system 100 according to the first embodiment in further having a cycle time determiner 36.

Referring to FIG. 3 again, the process T1 and the process T2 are performed in independent control cycles. Therefore, a difference may occur between the number of process amounts input from the sensor 4 and the number of process amounts transmitted from the second communicator 31.

The second identifier assigner 32 increments the serial number of the identifier on the control cycle of the process T1. Meanwhile, in the process T2, the second communicator 31 transmits the latest identifier stored in the second input memory 33 and a process amount corresponding to the latest identifier on the cycle of the process T2.

When the control cycles of the process T1 and the process T2 perfectly coincide with each other, all the serial numbers of the identifiers assigned in the process T1 are sequentially used as serial numbers of identifiers used by the second communicator 31 for the transmission. When the control cycle of the process T2 is longer than the control cycle of the process T1, there are missing numbers in the serial numbers of the identifiers used by the second communicator 31 for the transmission. That is, a state in which the second communicator 31 does not transmit some of process amounts output by the sensor 4 may occur.

To solve this problem, the cycle time determiner 36 determines a difference in the control cycle between the process T1 and the process T2 using the serial numbers of the identifiers assigned in the process T1 and the serial numbers of the identifiers assigned in the process T2.

### (Operation)

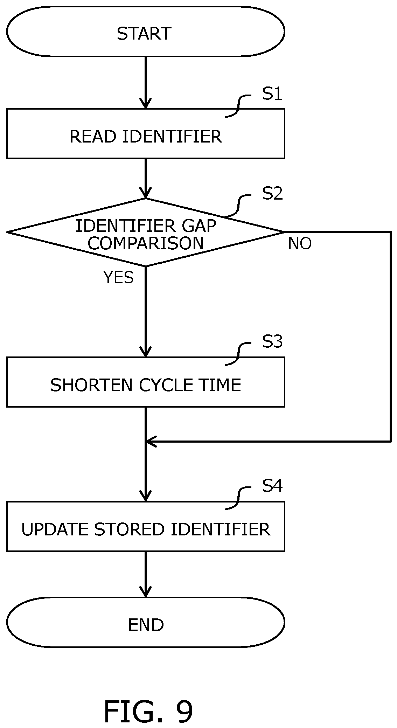

FIG. 9 is a flowchart illustrating an example of a determination process of the cycle time determiner 36. An example in which the cycle time determiner 36 stores the serial numbers of transmitted identifiers in the second input memory 33 is described here.

First, the cycle time determiner 36 reads the identifier (a first identifier) transmitted last time in the process T2 and the identifier (a second identifier) transmitted this time from the second input memory 33 (Step S1). Next, the cycle time determiner 36 determines whether the difference between the identifier transmitted last time and the identifier transmitted this time has a gap from the incremental value of the identifiers assigned in the process T1 (Step S2). For example, when the incremental value of the identifiers assigned in the process T1 is one as in a case of 103, 104, 105, and 106 and when the identifier transmitted last time in the process T2 is 103 and the identifier transmitted this time is 106, the difference therebetween is 3 and it is determined that a gap has occurred.

When it is determined that there is a gap in the increment (Yes at Step S2), it means that the cycle time of the process T2 is longer and the cycle time determiner 36 shortens the cycle time of the process T2 to decrease the gap (Step S3). When there is no gap in the increment (No at Step S2), the cycle time determiner 36 keeps the cycle time of the process T2. As the identifier required for order determination, a timestamp indicating the time when an input notification has been received may be used as well as the serial number. A gap may be calculated from the times of the timestamps.

Next, the cycle time determiner 36 stores the identifier (the second identifier) transmitted this time as the identifier (the first identifier) transmitted last time in the second input memory 33 (Step S4) and ends the process.

The cycle time determiner 36 can calculate a change of the cycle time of the process T2 by comparing the number of identifiers assigned in the process T1 in a past predetermined period with the number of identifiers assigned in the process T2 in the same period. For example, when the number of identifiers assigned in the process T1 is 10 and the number of identifiers assigned in the process T2 in the same period is 5, the control cycle of the process T2 can be equalized by multiplying the control cycle by 0.5 (=5/10).

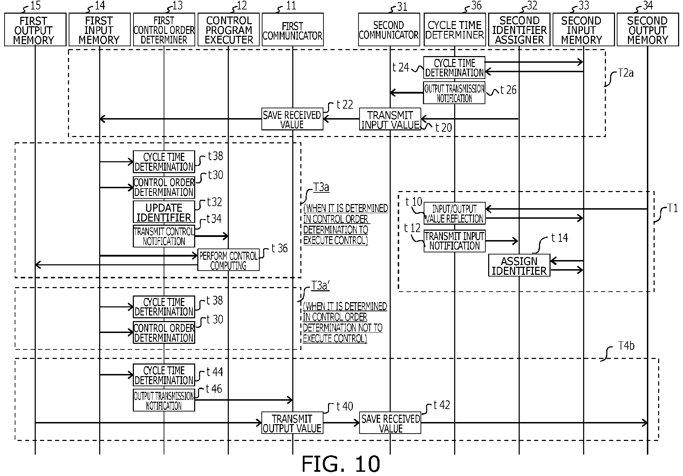

FIG. 10 is a diagram illustrating a sequence example of the remote control system 100 according to the fourth embodiment. The same processes as those having been already described are denoted by the same reference numbers and descriptions thereof are omitted in some cases. The process T1 is identical to that in the sequence example according to the first embodiment.

### (Process T2a)

A process T2a is a process obtained by adding the determination process of the cycle time determiner 36 to the process T2 according to the first embodiment. The cycle time determiner 36 determines a difference between the control cycle of the process T1 and the control cycle of the process T2a and shortens the control cycle of the process T2a when there is a gap (t24). When the adjustment of the control cycle of the process T2a ends, the cycle time determiner 36 outputs a transmission notification to the second communicator 31 (t26). Subsequently, the processes t20 and t22 are performed similarly in the process T2 according to the first embodiment.

### (Process T3a)

A process T3a is a process obtained by adding the cycle determination process of the first control order determiner 13 to the process T3 according to the first embodiment. The first control order determiner 13 determines a difference between the control cycle of the process T2a and the control cycle of the process T3a and shortens the control cycle of the process T3a when there is a gap (t38). Similarly to the determination process of the cycle time determiner 36, the first control order determiner 13 shortens the control cycle of the process T3a when there is a gap between the incremental value of the identifiers stored in the input memory and the incremental value of the identifiers stored in the storage element when the control computing has been performed. Subsequently, the processes t30 to t36 are performed similarly in the process T3 according to the first embodiment.

### (Process T3a')

A process T3a' is a process obtained by adding the determination process of the first control order determiner 13 to the process T3' according to the first embodiment. A sequence (t38) is substantially the same as the sequence (t38) of the process T3a. That is, a difference between the control cycle of the process T2a and the control cycle of the process T3a is determined. When there is a gap, the control cycle of the process T3a is shortened and the control order determination is subsequently performed (t30).

### (Process T4b)

A process T4b is a process obtained by adding the cycle determination process of the first control order determiner 13 to the process T4 according to the first embodiment. The first control order determiner 13 determines a difference between the control cycle of the process T2a and the control cycle of the process T4b and shortens the control cycle of the process T4b when there is a gap (t44). Similarly to the determination process of the cycle time determiner 36, the first control order determiner 13 shortens the control cycle of the process T4b when there is a gap between the incremental value of the identifiers stored in the input memory and the incremental value of the identifiers stored in the storage element when the control computing has been performed. When the adjustment determination of the control cycle of the process T4b ends, the first control order determiner 13 outputs a transmission notification to the first communicator 11 (t46). Subsequently, the processes t40 and t42 are performed similarly in the process T3 according to the first embodiment.

### (Effect)

As described above, according to the present embodiment, the remote control system 100 adjusts the control cycles of the process T2a, the process T3a, the process T3a', and the process T4b' and performs the control processing. Accordingly, the control computing can be repeatedly performed in order while the number of process values that are not transmitted to the remote control device 1 is decreased.

### (Second modification of fourth embodiment)

The remote control system 100 according to a second modification of the fourth embodiment is different from the remote control system 100 according to the fourth embodiment in that the control cycle of the process T2a can be also changed to be longer. Differences from the remote control system 100 according to the fourth embodiment are described below.

### (Operation)

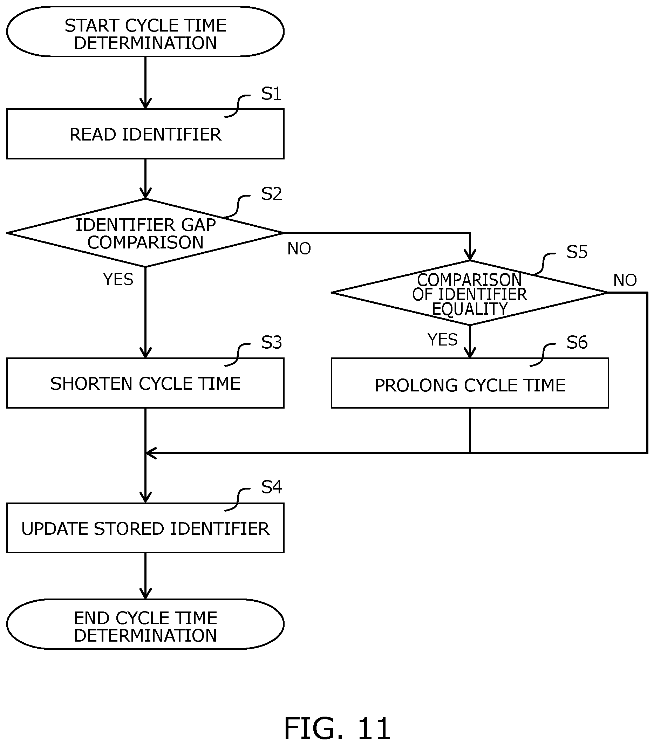

FIG. 11 is a flowchart illustrating an example of a determination process of the cycle time determiner 36 according to the second modification of the fourth embodiment. Processes substantially the same as those in the determination process (see FIG. 9) of the cycle time determiner 36 according to the second modification of the fourth embodiment are denoted by the same reference numbers S1, S2, and S3 and descriptions thereof are omitted in some cases.

When it is determined that there is no gap in the increment (No at Step S2), it means that the cycle time of the process T2 is longer and the cycle time determiner 36 shortens the cycle time of the process T2 to decrease the gap (Step S3). When there is no gap in the increment (No at Step S2), the cycle time determiner 36 performs a comparison of identifier equality to determine whether the serial number assigned in the process T1 and the serial number assigned in the process T2a are the same (Step S5). When the serial numbers are the same (Yes at Step S5), it means that the cycle time of T2a is shorter and accordingly the cycle time determiner 36 prolongs the cycle time of T2a (Step S6).

Next, the cycle time determiner 36 stores the identifier transmitted this time in the second input memory 33 as the identifier transmitted last time (Step S4) and ends the process.

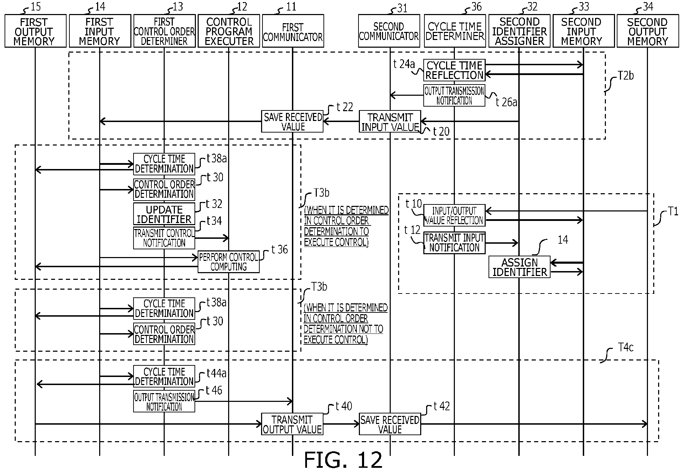

FIG. 12 is a diagram illustrating a sequence example of the remote control system 100 according to the second modification of the fourth embodiment. The same processes as those having been already described are denoted by the same reference numbers and descriptions thereof are omitted in some cases. The process T1 is identical to that in the sequence example according to the first embodiment.

### (Process T2b)

A process T2b is a process obtained by adding the determination process of the cycle time determiner 36 according to the second modification of the fourth embodiment. The cycle time determiner 36 determines a difference between the control cycle of the process T1 and the control cycle of the process T2a. The cycle time determiner 36 shortens the control cycle of the process T2a when there is a gap, and increases the control cycle of the process T2a when no gap is recognized in the increment (t24a). When the adjustment of the control cycle of the process T2b ends, the cycle time determiner 36 outputs a transmission notification including information of the control cycle of the process T2b to the second communicator 31 (t26). The second communicator 31 transmits the control cycle of the process T2b and subsequently performs t20 and t22.

### (Process T3b)

A process T3b is a process obtained by adding a cycle determination process using the control cycle of the process T2b. The first control order determiner 13 determines a difference between the control cycle of the process T2b and the control cycle of the process T3b, and changes the control cycle of the process T3b to be recorded in the first output memory 15 when the control cycle of the process T3b and the control cycle of the process T2b are different from each other (t38a). Subsequently, the processes t30 to t36 are performed similarly in the process T3 according to the first embodiment.

### (Process T3b')

A process T3b' is a process obtained by adding the cycle determination process using the control cycle of the process T2b. A sequence (t38a) is substantially the same as the sequence (t38a) of the process T3b. That is, when the control cycles are different, the control cycle of the process T3b is changed and the control order determination is subsequently performed (t30).

### (Process T4c)

A process T4c is a process obtained by adding the cycle determination process using the control cycle of the process T2b. The first control order determiner 13 determines a difference between the control cycle of the process T2a and the control cycle of the process T4c. When the control cycles are different, the first control order determiner 13 changes the control cycle of the process T4c (t44a). When the adjustment determination of the control cycle of the process T4b ends, the first control order determiner 13 records the control cycle of the process T4c in the first output memory 15 and outputs a transmission notification to the first communicator 11 (t46). The first communicator 11 first notifies of the control cycle of the process T2b and performs the processes t40 and t42 similarly in the process T3 according to the first embodiment.

### (Effect)

As described above, according to the present embodiment, the remote control system 100 adjusts the control cycles of the process T2a, the process T3a, the process T3a', and the process T4b' to be the same to perform control processing. Accordingly, the control computing can be repeatedly performed in order while the number of the process values not transmitted to the remote control device 1 is reduced. It is possible to adjust the cycle time of the communication processing between the remote control device 1 and the control device 3 or the computing processing in the remote control device 1 to an appropriate value without causing the cycle time to be too short.

While certain embodiments have been described above, these embodiments have been presented by way of example only, and are not intended to limit the scope of the invention. The novel devices, methods, and programs described in the present specification may be embodied in a variety of other modes. Various omissions, substitutions, and changes may be made to the modes of the devices, methods, and programs described in the present specification without departing from the spirit of the invention.

### Reference Signs List

1: remote control device, 2: wide area network, 3: control device, 4: sensor, 5: actuator, 11: first communicator, 12: control program executor, 13: first control order determiner, 31: second communicator, 32: second identifier assigner, 35, 35a: second control order determiner, 36: cycle time determiner, 100: remote control system.

## Claims

1. A remote control device processing a plurality of same signals transmitted through a network comprising a plurality of transmission paths, the device comprising:
a first communicator configured to asynchronously receive the signals each associated with an identifier;
a first control order determiner configured to determine whether an input value included in each of the signals is in predetermined order on a basis of the identifiers; and
a control program executer configured to execute a control program of a controller using the input value when the first control order determiner determines that the input value is in the predetermined order.

2. The device of Claim 1, wherein
a transmission source identifier indicating a transmission source is also associated with the signals, and
the first control order determiner determines whether the input value is in the predetermined order on a basis of the transmission source identifier.

3. The device of Claim 2, wherein the first control order determiner changes a control cycle of at least either the first control order determiner or the control program executer on a basis of reception order of the identifiers.

4. The device of Claim 1, wherein
the first control order determiner stores therein a first identifier at a time when the control program executer has performed computing among the identifiers associated with the signals, and
the first control order determiner determines whether the input value is in the predetermined order by comparing the first identifier with a second identifier associated with one of the signals received this time by the first communicator.

5. The device of Claim 4, wherein the first control order determiner changes a control cycle of at least either the first control order determiner or the control program executer on a basis of a difference between the first identifier and the second identifier.

6. The device of Claim 2, wherein the first control order determiner changes a control cycle of at least either the first control order determiner or the control program executer on a basis of a control cycle of the transmission source transmitted through the network.

7. A control device comprising:
a second identifier assigner configured to assign an identifier required for order determination to an input value from a sensor configured to output a value indicating a state of a controller; and
a second communicator configured to asynchronously transmit a plurality of signals each including a same identifier associated with the input value through a network comprising a plurality of transmission paths.

8. The device of Claim 7, wherein the second identifier assigner also associates a transmission source identifier indicating a transmission source.

9. The device of Claim 7, further comprising a cycle time determiner configured to adjust a control cycle in which the second identifier assigner assigns the identifier and a control cycle in which the second communicator transmits the signals on a basis of assignment order in which the second identifier assigner assigns the identifier and assignment order of the identifiers associated with the signals transmitted by the second communicator.

10. The device of Claim 9, wherein the cycle time determiner shortens or prolongs the control cycle in which the second communicator transmits the signals.

11. A remote control system performing control processing through a network comprising a plurality of transmission paths, the system comprising:
a control device; and a remote control device, wherein
the control device comprises
a second identifier assigner configured to assign an identifier required for order determination to an input value from a sensor configured to output a value indicating a state of a controller, and
a second communicator configured to asynchronously transmit a plurality of signals each including a same identifier associated with the input value through the network, and
the remote control device comprises
a first communicator configured to asynchronously receive the signals,
a first control order determiner configured to determine whether the input value included in each of the signals is in predetermined order on a basis of the identifiers, and
a control program executer configured to execute a control program of the controller using the input value when the first control order determiner determines that the input value is in the predetermined order.

12. The system of Claim 11, wherein
the first communicator asynchronously transmits a plurality of same control signals generated by execution of the control program of the controller using the input value through the network, and
the control device outputs a first received control signal among the same control signals to the controller.

13. A control method of processing a plurality of same signals transmitted through a network comprising a plurality of transmission paths, the method comprising:
a communication step of asynchronously receiving the signals each associated with an identifier;
a control order determining step of determining whether an input value included in each of the signals is in predetermined order on a basis of the identifiers; and
a control program executing step of executing a control program of a controller using the input value when it is determined that the input value is in the predetermined order.

14. A control method comprising:
an identifier assigning step of assigning an identifier required for order determination to an input value from a sensor configured to output a value indicating a state of a controller; and
a communicating step of asynchronously transmitting a plurality of signals each including a same identifier associated with the input value through a network comprising a plurality of transmission paths.
